# EUROPÄISCHE PATENTSCHRIFT

(11) **EP 1 483 145 B1**
(45) Veröffentlichungstag und Bekanntmachung des Hinweises auf die Patenterteilung: **24.05.2006**
(21) Anmeldenummer: 02776755.7
(22) Anmeldetag: 30.09.2002
(51) Int. Cl.: B62D 3/12, B60K 31/04

(54) **EINGABEVORRICHTUNG FÜR EIN GESCHWINDIGKEITSREGELSYSTEM IN KRAFTFAHRZEUGEN**
INPUT DEVICE FOR A SPEED REGULATING SYSTEM ON MOTOR VEHICLES
DISPOSITIF D'ENTREE POUR SYSTEME DE REGULATION DE VITESSE DE VEHICULES AUTOMOBILES

(30) Priorität: 01.03.2002 DE 10209137
(43) Veröffentlichungstag der Anmeldung: 08.12.2004
(73) Patentinhaber: ROBERT BOSCH GMBH, 70442 Stuttgart (DE)
(72) Erfinder: WINNER, Hermann, 76467 Bietigheim (DE); HELLMANN, Manfred, 71706 Hardthof (DE)
(86) Internationale Anmeldenummer: PCT/DE2002/003704
(87) Internationale Veröffentlichungsnummer: WO 2003/074344

(56) Entgegenhaltungen:
- EP-A- 0 876 936
- DE-A- 19 802 704

## Beschreibung

Die Erfindung betrifft eine Eingabevorrichtung für ein Geschwindigkeitsregelsystem in Kraftfahrzeugen, mit einem Beschleunigungsbefehlsgeber, einem Schalter zur Eingabe einer Wunschgeschwindigkeit und einer Bestimmungseinrichtung, die die Wunschgeschwindigkeit als Funktion der Betätigungdauer des Schalters erhöht.

### Stand der Technik

Für Kraftfahrzeuge sind Geschwindigkeitsregelsysteme bekannt, mit denen die Geschwindigkeit des Fahrzeugs auf eine vom Fahrer gewählte Wunschgeschwindigkeit geregelt werden kann. Wenn das Fahrzeug auch einen Abstandssensor, beispielsweise in der Form eines Radarsensors, eines Stereo-Kamerasystems oder dergleichen aufweist, kann die Fahrzeuggeschwindigkeit auch so geregelt werden, daß automatisch ein geeigneter Sicherheitsabstand zu einem vorausfahrenden Fahrzeug eingehalten wird. Ein Beispiel eines solchen Regelsystems, das auch als ACC-System (Active Cruise Control) bekannt ist, wird beschrieben in "Adaptive Cruise Control System - Aspects and Development Trends" von Winner, Witte, Uhler und Lichtenberg, Robert Bosch GmbH, in SAE Technical Paper Series 961010, International Congress & Exposition, Detroit, 26.-29. Februar 1996.

Der Schalter, mit dem der Fahrer die Wunschgeschwindigkeit verändern kann, wird üblicherweise durch einen am Lenkrad angeordneten Hebel gebildet, der sich sowohl nach oben als auch nach unten verschwenken läßt, um die Wunschgeschwindigkeit zu erhöhen bzw. zu verringern. Wenn dieser Hebel für längere Zeit in der oberen Endlage gehalten wird, so bewirkt die Bestimmungseinrichtung eine stufenweise Erhöhung der Wunschgeschwindigkeit mit festen Inkrementen und in festen Intervallen. Entsprechend wird die Wunschgeschwindigkeit verringert, wenn der Fahrer den Hebel in der unteren Position hält. Wenn der Fahrer den Hebel losläßt, wird die eingestellte Wunschgeschwindigkeit gehalten.

Mit Hilfe des Gaspedals oder, allgemeiner, mit Hilfe eines Beschleunigungsbefehlsgebers kann der Fahrer auch direkt in das Antriebssystem des Fahrzeugs eingreifen und so die Funktion des Geschwindigkeitsregelsystems jederzeit übersteuern. So kann der Fahrer beispielsweise bei einem Überholvorgang durch einen Druck auf das Gaspedal die eingestellte Wunschgeschwindigkeit vorübergehend überschreiten. Wenn der Fahrer das Gaspedal wieder losläßt, fällt die Geschwindigkeit des Fahrzeugs auf die zuvor eingestellte Wunschgeschwindigkeit zurück. Wenn der Fahrer jedoch mit Hilfe des Gaspedals das Fahrzeug beschleunigt hat, kann er durch kurzes Antippen des Hebels nach oben oder nach unten bewirken, daß die dann erreichte Fahrzeuggeschwindigkeit als neue Wunschgeschwindigkeit gespeichert wird. In diesem Sinne ist auch der Beschleunigungsbefehlsgeber bzw. das Gaspedal als Teil der Eingabevorrichtung anzusehen.

In DE 198 02 704 A1 wird eine Eingabevorrichtung gemäß der Gattung des Anspruchs 1 beschrieben, bei der die Wunschgeschwindigkeit nur stufenweise variiert werden kann, beispielsweise in Schritten von 10 km/h. Wenn der Fahrer, während er mit Hilfe des Gaspedals beschleunigt, den Schalter betätigt, so wird als neue Wunschgeschwindigkeit derjenige Wert gespeichert, der der dann erreichen Ist-Geschwindigkeit am nächsten liegt.

Generell hat der Fahrer somit zwei Möglichkeiten, die Wunschgeschwindigkeit zu erhöhen. Zum einen kann er das Fahrzeug mit Hilfe des Gaspedals beschleunigen und dann durch Antippen des Schalters die neue Wunschgeschwindigkeit setzen. Zum anderen kann er durch Halten des Hebels in der oberen Position die Bestimmungseinrichtung veranlassen, die Wunschgeschwindigkeit mit fest vorgegebener Anstiegsrate zu erhöhen.

Die erste Variante hat den Vorteil, daß der Fahrer durch den Druck auf das Gaspedal selbst bestimmen kann, wie stark das Fahrzeug beschleunigt wird, so daß er durch entsprechend starke Beschleunigung des Fahrzeugs verhältnismäßig rasch die neue Wunschgeschwindigkeit erreichen kann. Ein Nachteil besteht jedoch darin, daß die neue Wunschgeschwindigkeit erst dann gesetzt werden kann, wenn das Fahrzeug diese Geschwindigkeit erreicht hat. Da das Regelsystem mit einer unvermeidbaren Regelverzögerung arbeitet, kann dies zu einem vorübergehenden Überschießen über die eigentlich gewünschte Geschwindigkeit führen.

Bei der zweiten Variante läßt sich dieses Überschießen des Regelsystems weitgehend vermeiden. Ein weiterer Vorteil dieser Variante besteht darin, daß die Veränderung der Drosselklappenstellung und/oder der Einspritzmenge, mit der die Beschleunigung des Fahrzeugs bewirkt wird, in diesem Fall nicht direkt vom Fahrer bestimmt wird, sondern vom Motormanagementsystem des Fahrzeugs berechnet wird und daher optimal an den jeweiligen Betriebszustand des Motors angepaßt werden kann, so daß die Beschleunigung mit optimalem Wirkungsgrad und daher entsprechend verbrauchsgünstig erfolgt. Ein Nachteil der zweiten Variante besteht jedoch darin, daß der Fahrer den Hebel solange in der oberen Position halten muß, bis durch schrittweise Erhöhung der Wunschgeschwindigkeit der letztlich gewünschte Wert erreicht worden ist. Dies wird als Beeinträchtigung des Komforts empfunden und kann, insbesondere in mit hoher Geschwindigkeit durchfahrenen Kurven, auch zu einer Beeinträchtigung der Fahrsicherheit führen. Auch wenn der Hebel in der Nähe des Lenkrads angeordnet ist, kann der Fahrer, solange er den Hebel betätigt, das Lenkrad nicht mit beiden Händen fest umgreifen, so daß die Kontrolle über die Lenkung beeinträchtigt ist.

Die Zeit, die für die Einstellung der höheren Wunschgeschwindigkeit benötigt wird, ist davon abhängig, mit welchen Inkrementen und in welchen Intervallen die Bestimmungseinrichtung die Wunschgeschwindigkeit erhöht. Bei größeren Inkrementen kann die neue Wunschgeschwindigkeit schnell erreicht werden, doch läßt sie sich dann nur relativ grob einstellen. Wenn andererseits die Wunschgeschwindigkeit in kürzeren Intervallen erhöht wird, ist die Einstellung dadurch erschwert, daß die Wunschgeschwindigkeit sehr kritisch von der Betätigungsdauer des Hebels abhängt. Da bei rascher Erhöhung der Wunschgeschwindigkeit auch die Ist-Geschwindigkeit vorübergehend hinter der Wunschgeschwindigkeit zurückbleiben wird, kann es leicht vorkommen, daß der Fahrer versehentlich eine zu hohe Wunschgeschwindigkeit einstellt und die Wunschgeschwindigkeit dann nachträglich wieder in entgegengesetzter Richtung korrigieren muß.

### Aufgabe, Lösung und Vorteile der Erfindung

Aufgabe der Erfindung ist es, eine Eingabevorrichtung zu schaffen, die dem Fahrer einerseits eine genaue Dosierung und andererseits eine einfache und schnelle Erhöhung der Wunschgeschwindigkeit ermöglicht.

Diese Aufgabe wird erfindungsgemäß dadurch gelöst, daß die Bestimmungseinrichtung die Funktion, die die Erhöhung der Wunschgeschwindigkeit bestimmt, in Abhängigkeit von der Betätigung des Beschleunigungsbefehlsgebers verändert.

Wenn der Fahrer den Schalter betätigt, ohne gleichzeitig das Gaspedal zu betätigen, so wird die Wunschgeschwindigkeit gemäß einer ersten Funktion nur allmählich erhöht, so daß dem Fahrer eine Feinabstimmung der Wunschgeschwindigkeit ermöglicht wird. Wenn dagegen der Fahrer die Regelfunktion mit Hilfe des Gaspedals übersteuert und gleichzeitig den Schalter zur Erhöhung der Wunschgeschwindigkeit betätigt, so wird die Wunschgeschwindigkeit gemäß einer zweiten Funktion mit höherer Anstiegsrate vergrößert, so daß die neue Wunschgeschwindigkeit sehr schnell erreicht wird und der Fahrer den Schalter nicht lange zu halten braucht.

Diese Ausgestaltung der Eingabevorrichtung bietet dem Fahrer einen maximalen Bedienkomfort in unterschiedlichen Verkehrssituationen. Wenn beispielsweise das Geschwindigkeitsregelsystem nicht mit einer Abstandsregelung kombiniert ist, besteht oft die Notwendigkeit, die Wunschgeschwindigkeit relativ fein dosiert an die Geschwindigkeit des vorausfahrenden Fahrzeugs anzupassen. In diesem Fall wird der Fahrer eine Feinabstimmung der Wunschgeschwindigkeit allein mit Hilfe des Schalters vornehmen, ohne das Gaspedal zu betätigen. Wenn der Fahrer dagegen auf längere Zeit mit einer deutlich erhöhten Wunschgeschwindigkeit fahren möchte, beispielsweise nach Aufhebung einer Geschwindigkeitsbeschränkung, so wird er zunächst das Gaspedal betätigen, um das Fahrzeug zügig zu beschleunigen. Gleichzeitig kann er dann mit Hilfe des Schalters sehr rasch die neue Wunschgeschwindigkeit einstellen, und er kann dann wieder den Fuß vom Gas nehmen, während das Fahrzeug allein bis zum Erreichen der Wunschgeschwindigkeit weiter beschleunigt.

Als besonders vorteilhaft erweist sich die Eingabevorrichtung beispielsweise auch in der Situation, in der bei einem Fahrzeug mit ACC-System ein vorausfahrendes Fahrzeug verfolgt wird, der Fahrer des ACC-Fahrzeugs sich dann aber doch zu einem Überholvorgang entschließt, weil der Fahrer des vorausfahrenden Fahrzeugs mit einer sehr ungleichmäßigen Geschwindigkeit fährt. In diesem Fall wird der Fahrer des ACC-Fahrzeugs durch einen Druck auf das Gaspedal den Überholvorgang einleiten, und er kann dann gleichzeitig durch kurzes Antippen des Schalters die Wunschgeschwindigkeit auf einen Wert erhöhen, der sicherstellt, daß sich der Abstand zu dem überholten Fahrzeug vergrößert. Wenn der Überholvorgang beendet ist und der Fahrer das Gaspedal losläßt, fällt das Fahrzeug dann auf die neue, etwas erhöhte Wunschgeschwindigkeit zurück.

Vorteilhafte Ausgestaltungen Erfindung ergeben sich aus den Unteransprüchen.

Bevorzugt ist die Eingabevorrichtung mit einer Anzeigevorrichtung kombiniert, die den Fahrer über die jeweils gültige Wunschgeschwindigkeit informiert. Die Anzeige der Wunschgeschwindigkeit kann beispielsweise mit Hilfe von Leuchtdioden erfolgen, die in den Tachometer des Fahrzeugs integriert sind. Alternativ ist auch eine numerische Anzeige der Wunschgeschwindigkeit denkbar.

Die Funktion, die die Erhöhung der Wunschgeschwindigkeit bestimmt, wenn der Fahrer auch das Gaspedal betätigt, kann so ausgelegt sein, daß der Wertebereich nur "runde" Geschwindigkeitswerte enthält, beispielsweise 50 km/h, 60 km/h, 70 km/h, etc.. Wenn das Fahrzeug dann beispielsweise einen Baustellenbereich passiert hat, in dem eine Geschwindigkeitsbeschränkung von 60 km/h gültig war, und danach eine Geschwindigkeitsbeschränkung von 100 km/h gilt, so kann der Fahrer mit Hilfe des Schalters in sehr kurzer Zeit, in nur vier Inkrementschritten, die Wunschgeschwindigkeit auf 100 km/h erhöhen, während er gleichzeitig mit einem Druck auf das Gaspedal die Beschleunigungsphase einleitet. Ist die neue Wunschgeschwindigkeit erreicht, kann der Fahrer durch Betätigung des Schalters - ohne gleichzeitige Betätigung des Gaspedals - die Wunschgeschwindigkeit feinstufig variieren, beispielsweise in Inkrementen von 1 oder 2 km/h.

Die Funktionen, die die Erhöhung der Wunschgeschwindigkeit durch die Bestimmungseinrichtung festlegen, können sich sowohl in der Höhe der Inkremente unterscheiden als auch in der Länge der Zeitintervalle, in denen diese Erhöhungen stattfinden. Bei diesen Funktionen kann es sich auch um nichtlineare Funktionen handeln, die beispielsweise bewirken, daß die Wunschgeschwindigkeit bei Betätigung des Schalters zunächst mit einer niedrigen Anstiegsrate und dann bei längerer Schalterbetätigung mit größerer Anstiegsrate zunimmt.

### Zeichnung

Im folgenden werden Ausführungsbeispiele der Erfindung an der Zeichnung erläutert.

Es zeigen:
- Fig.1: ein Blockdiagramm eines Geschwindigkeitsreglers und zugehöriger Bedienungs- und Anzeigeelemente;
- Fig. 2: eine Anzeigeeinrichtung, die in einen Fahrgeschwindigkeitsanzeiger auf dem Armaturenbrett des Kraftfahrzeugs integriert ist;
- Fig. 3: ein Flußdiagramm zu Erläuterung der Funktionsweise einer Bestimmungseinrichtung für die Wunschgeschwindigkeit; und
- Fig. 4 und 5: Beispiele für Funktionen zur Veränderung der Wunschgeschwindigkeit.

### Beschreibung von Ausführungsbeispielen

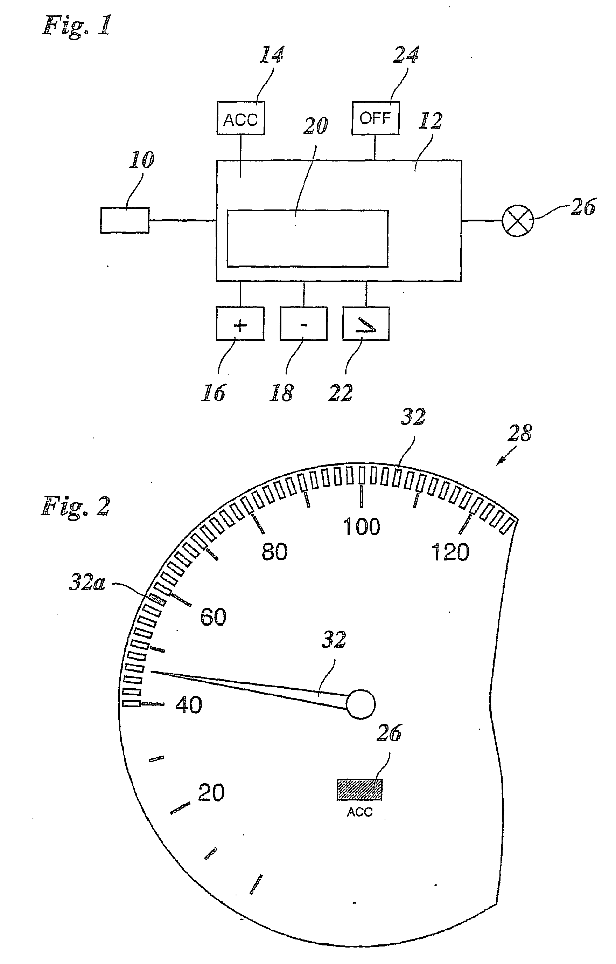

Da der Aufbau und die Wirkungsweise eines Geschwindigkeitsreglers mit ACC-Funktion bekannt sind, zeigt Figur 1 lediglich die wichtigsten Komponenten in einem Blockdiagramm. Eine Sensoreinrichtung umfaßt einen Abstandssensor 10, beispielsweise einen Radarsensor, der den Abstand und die Relativgeschwindigkeit eines vorausfahrenden Fahrzeugs mißt. Sofern von dem Radarsensor mehrere Zielobjekte erfaßt werden, beispielsweise mehrere Fahrzeuge oder auch Standziele wie Straßenschilder und dergleichen, wird durch Plausibilitätsauswertung dasjenige Zielobjekt ausgewählt, das durch das unmittelbar vorausfahrende Fahrzeug gebildet wird.

Die Signale des Abstandssensors werden in einer elektronischen Regeleinrichtung 12 ausgewertet, die beispielsweise durch einen Mikrocomputer gebildet wird. Die Regeleinrichtung 12 wirkt auf das Antriebs- und Bremssystem des Fahrzeugs ein, um die Fahrgeschwindigkeit entweder auf eine vom Fahrer gewählte Wunschgeschwindigkeit oder auf einen geeigneten Abstand zum vorausfahrenden Fahrzeug zu regeln.

Diese Regelfunktion, im folgenden als ACC-Funktion bezeichnet, wird vom Fahrer durch Betätigen einer ACC-Taste 14 aktiviert. Wenn bereits früher eine Wunschgeschwindigkeit gespeichert war, hat das Betätigen der ACC-Taste die Funktion, daß die Regelung auf diese Wunschgeschwindigkeit wieder aufgenommen wird ("resume"). Andernfalls wird die Wunschgeschwindigkeit gesetzt, indem der Fahrer kurzzeitig einen Schalter 16 (Tastschalter) betätigt, nachdem das Fahrzeug die gewünschte Geschwindigkeit erreicht hat. Weitere oder anhaltende Betätigung des Schalters 16 bewirkt eine schrittweise Erhöhung der Wunschgeschwindigkeit. Entsprechend bewirkt die Betätigung eines Schalters 18 eine schrittweise Absenkung der Wunschgeschwindigkeit. Die Schalter 16, 18 werden in der Praxis durch einen am Lenkrad angeordneten Hebel gebildet, der zum Erhöhen der Wunschgeschwindigkeit nach oben und zum Absenken der Wunschgeschwindigkeit nach unten bewegt werden kann. Der Teil der Regeleinrichtung 12, der die Wunschgeschwindigkeit in Abhängigkeit von den über die Schalter 16, 18 eingegebenen Befehlen bestimmt, wird als Bestimmungseinrichtung 20 bezeichnet.

Durch Betätigen des Gaspedals kann der Fahrer die ACC-Funktion übersteuern, um vorübergehend auf eine höhere Geschwindigkeit zu beschleunigen. Die Betätigung des Gaspedals wird von einem Gaspedalfühler 22 erfaßt.

Mit einer Taste 24 kann der Geschwindigkeitsregler deaktiviert werden. Eine Anzeigelampe 26 zeigt an, ob die ACC-Funktion aktiv oder inaktiv ist.

Figur 2 zeigt einen Fahrgeschwindigkeitsanzeiger 28, wie er üblicherweise auf dem Armaturenbrett eines Kraftfahrzeugs angeordnet ist. Der Fahrgeschwindigkeitsanzeiger 28 weist wie üblich eine Geschwindigkeitsskala und eine Tachonadel 30 auf und enthält auch die bereits erwähnte Anzeigelampe 26 für die ACC-Funktion.

Zu der Anzeigeeinrichtung gehört weiterhin eine Vielzahl von Leuchtdioden 32, die in dem Geschwindigkeitsbereich ab 40 km/h gleichmäßig mit einer Auflösung von 2 km/h über die Geschwindigkeitsskala verteilt sind. Das Aufleuchten einer dieser Leuchtdioden 32 gibt die Wunschgeschwindigkeit an, die mit Hilfe eines der Schalter 16, 18 gesetzt wurde. Im gezeigten Beispiel beträgt die gesetzte Wunschgeschwindigkeit 58 km/h, und dementsprechend leuchtet die dieser Geschwindigkeit zugeordnete Leuchtdiode 32a auf.

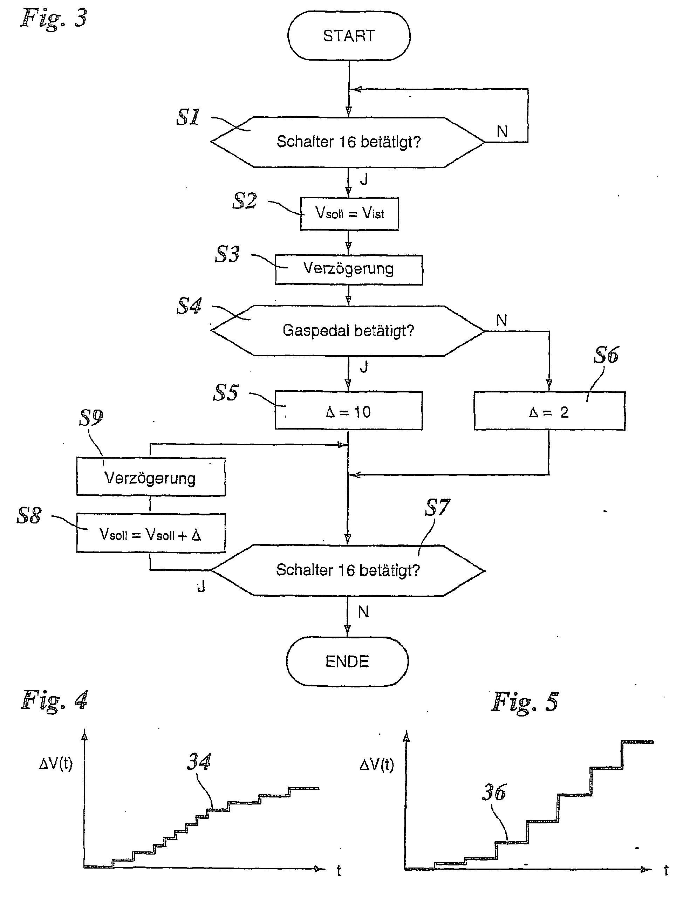

Die Funktion der Bestimmungseinrichtung 20, soweit sie sich auf die Erhöhung der Wunschgeschwindigkeit bezieht, soll nun anhand des in Fig. 3 gezeigten Flußdiagramms erläutert werden. Das Flußdiagramm zeigt eine Programmroutine, die in bestimmten Zeitintervallen, beispielsweise alle 10 ms, aufgerufen wird. Nach dem Beginn des Programms wird in Schritt S 1 abgefragt, ob der Schalter 16 betätigt wurde. Dieser Schritt wird wiederholt, bis eine Schalterbetätigung festgestellt wurde. Danach wird in Schritt S2 die aktuelle Geschwindigkeit Vᵢₛₜ als neue Wunschgeschwindigkeit Vₛₒₗₗ gesetzt.

Nach Ablauf einer kurzen Wartezeit (Schritt S3) wird in Schritt S4 durch Überprüfung des Gaspedalfühlers 22 abgefragt, ob das Gaspedal betätigt ist. Wenn dies der Fall ist, so wird angenommen, daß der Fahrer die Wunschgeschwindigkeit möglichst rasch erhöhen will. In Schritt S5 wird deshalb ein Inkrement Δ für die Erhöhung der Wunschgeschwindigkeit auf 10 km/h gesetzt. andernfallswird in Schritt S6 das Inkrement Δ auf einen kleineren Wert gesetzt, beispielsweise auf 2 km/h. In Schritt S7 wird erneut abgefragt, ob der Schalter 16 noch betätigt ist, d. h., ob der Fahrer 16 den Schalter gehalten hat. In diesem Fall wird die Wunschgeschwindigkeit in Schritt S8 entweder um 10 km/h oder um 2 km/h erhöht und nach Ablauf eines bestimmten Zeitintervalls (Schritt S9) erfolgt ein Rücksprung zu Schritt S7. Solange der Fahrer den Schalter 16 betätigt hält, werden die Schritte S7 bis S9 zyklisch durchlaufen, und die Wunschgeschwindigkeit wird in Inkrementen Δ schrittweise erhöht. Während die Wunschgeschwindigkeit schrittweise erhöht wird, bleibt die Regeleinrichtung 12 aktiv, so daß die Ist-Geschwindigkeit mit der systembedingten Regelverzögerung der Wunschgeschwindigkeit folgt.

Wenn der Fahrer den Schalter 16 losläßt, wird das Programm beendet, und die bis dahin erreichte Wunschgeschwindigkeit bleibt gespeichert.

Der Fahrer kann somit die aktuelle Geschwindigkeit als neue Wunschgewschwindigkeit setzen indem er - bei betätigtem oder unbetätigtem Gaspedal - den Schalter 16 nur kurz antippt. Außerdem kann er eine Feinabstimmung der Wunschgeschwindigkeit mit einer Auflösung von 2 km/h vornehmen, indem er den Schalter 16 betätigt hält, während das Gaspedal unbetätigt bleibt. Wenn der Fahrer erst das Gaspedal drückt und dann den Schalter 16 betätigt und hält, wird angenommen, daß der Fahrer beschleunigen und die Wunschgeschwindigkeit deutlich erhöhen möchte. Dies wird ihm dadurch erleichtert, daß die Erhöhung mit dem größeren Inkrement Δ = 10 km/h und folglich bei gleicher Verzögerungszeit in Schritt S9 mit größerer Anstiegsrate erfolgt. Da im gezeigten Beispiel die Gaspedalstellung nicht wiederholt abgefragt wird, bleibt die hohe Anstiegsrate erhalten, solange der Fahrer den Schalter 16 betätigt hält, auch wenn er inzwischen den Fuß vom Gas genommen hat.

Die Zunahme der Wunschgeschwindigkeit wird durch die Leuchtdioden 32 der Anzeigevorrichtung angezeigt. Der Fahrer kann so die Zunahme der Wunschgeschwindigkeit verfolgen und die Wunschgeschwindigkeit wählen, indem er im geeigneten Augenblick den Schalter 16 losläßt. Aufgrund der hohen Anstiegsrate wird die Aufmerksamkeit des Fahrers dabei nur sehr kurze Zeit in Anspruch genommen.

Im gezeigten Beispiel erfolgt die Erhöhung der Wunschgeschwindigkeit auch mit dem großen Inkrement von 10 km/h jeweils von der aktuellen Wunschgeschwindigkeit aus. Wenn die Wunschgeschwindigkeit zunächst 58 km/h betragen hat, wird sie also schrittweise auf 68 km/h, 78 km/h, etc., erhöht. Wahlweise kann das Programm jedoch so modifiziert werden, daß bei der ersten Ausführung des Schritts S8 im Anschluß an den Schritt S5 die Wunschgeschwindigkeit nur auf den nächsthöheren "runden" Wert erhöht wird, also beispielsweise von 58 km/h zunächst auf 60 km/h, dann auf 70 km/h, 80 km/h, etc..

Statt das Inkrement Δ zu vergrößern, wie in Schritt S5, läßt sich die Anstiegsrate der Wunschgeschwindigkeit auch dadurch erhöhen, daß bei unverändertem Inkrement die in Schritt S9 geltende Verzögerungszeit reduziert wird.

Während in den oben beschriebenen Beispielen die Wunschgeschwindigkeit zwar schrittweise, aber insgesamt linear ansteigt, läßt sich die Wunschgeschwindigkeit auch gemäß einer nichtlinearen Funktion in Abhängigkeit von der Zeit erhöhen. Beispiele sind in Fig. 4 und 5 dargestellt. Die Kurven 34 und 36 in Fig. 4 und 5 repräsentieren Funktionen ΔV(t), die die Erhöhung der Wunschgeschwindigkeit in Abhängigkeit von der Zeit t angeben, während der der Schalter 16 in der betätigten Stellung gehalten wird. In Fig. 4 steigt die Wunschgeschwindigkeit zunächst langsam und dann progressiv schneller an. Bei sehr langer Haltezeit flacht die Kurve wieder ab und entspricht dann einer linearen Zunahme der Wunschgeschwindigkeit mit konstanter Anstiegsrate. Die Änderung der Wunschgeschwindigkeit erfolgt in Fig. 4 in stets gleichen Inkrementen, aber mit unterschiedlicher Verzögerungszeit. In Fig. 5 wird dagegen die Wunschgeschwindigkeit in konstanten Zeitintervallen erhöht, jedoch mit variablen Inkrementen. Die Wunschgeschwindigkeit nimmt hier zunächst nur langsam zu, dann jedoch immer schneller und schließlich mit einer konstanten, relativ hohen Anstiegsrate.

Wenn der Gaspedalfühler 22 so ausgebildet ist, daß er das Ausmaß der Betätigung des Gaspedals auch quantitativ messen kann, läßt sich die Anstiegsrate der Wunschgeschwindigkeit auch in Abhängigkeit von der Stärke der Betätigung des Gaspedals variieren.

## Patentansprüche

1. Eingabevorrichtung für ein Geschwindigkeitsregelsystem in Kraftfahrzeugen, mit einem Beschleunigungsbefehlsgeber, einem Schalter (16) zur Eingabe einer Wunschgeschwindigkeit und einer Bestimmungseinrichtung (20), die die Wunschgeschwindigkeit als Funktion der Betätigungsdauer des Schalters (16) erhöht, wobei die Bestimmungseinrichtung (20) die Funktion, die die Erhöhung der Wunschgeschwindigkeit bestimmt, in Abhängigkeit von der Betätigung des Beschleunigungsbefehlsgebers verändert wobei der Beschleunigungsbefehlsgeber ein Gaspedal ist **dadurch gekennzeichnet, daß** die Bestimmungseinrichtung (20) die Wunschgeschwindigkeit mit höherer Anstiegsrate erhöht, wenn bei Betätigung des Schalters (16) auch das Gaspedal betätigt ist.

2. Eingabevorrichtung nach Anspruch 1, **gekennzeichnet durch** eine Anzeigeeinrichtung (28) zur Anzeige der jeweils gültigen Wunschgeschwindigkeit.

3. Eingabevorrichtung nach einem der vorstehenden Ansprüche, **dadurch gekennzeichnet, daß** die Bestimmungseinrichtung (20) die Wunschgeschwindigkeit jeweils nach Ablauf eines Erhöhungszeitintervalls um ein Inkrement (D) erhöht, solange der Schalter (16) betätigt ist.

4. Eingabevorrichtung nach Anspruch 3, **dadurch gekennzeichnet, daß** sich die Funktionen, die die Erhöhung der Wunschgeschwindigkeit bestimmen, in der Höhe des Inkrements (D) unterscheiden.

5. Eingabevorrichtung nach Anspruch 3 oder 4, **dadurch gekennzeichnet, daß** sich die Funktionen, die die Erhöhung der Wunschgeschwindigkeit bestimmen, in der Länge des Erhöhungszeitintervalls unterscheiden.

## Claims

1. Input apparatus for a speed control system in motor vehicles, having an acceleration command transmitter, a switch (16) for inputting a desired speed, and a determination device (20) which increases the desired speed as a function of the operating period of the switch (16), with the determination device (20) changing the function, which determines the increase in the desired speed, as a function of the operation of the acceleration command transmitter, the acceleration command transmitter being an accelerator pedal, **characterized in that** the determination device (20) increases the desired speed at a higher rate of rise if the accelerator pedal is also operated when the switch (16) is operated.

2. Input apparatus according to Claim 1, **characterized by** a display device (28) for displaying the respectively valid desired speed.

3. Input apparatus according to either of the preceding claims, **characterized in that** the determination device (20) increases the desired speed by one increment (D) each time an increase time interval elapses, for as long as the switch (16) is operated.

4. Input apparatus according to Claim 3, **characterized in that** the magnitude of the increment (D) of the functions, which determine the increase in the desired speed, varies.

5. Input apparatus according to Claim 3 or 4, **characterized in that** the length of the increase time interval of the functions, which determine the increase in the desired speed, varies.

## Revendications

1. Dispositif d'entrée pour un système de régulation de vitesse dans des véhicules automobiles, comprenant un organe de commande d'accélération, un commutateur (16) pour l'entrée d'une vitesse souhaitée et un dispositif de détermination (20) qui augmente la vitesse souhaitée en fonction de la durée d'actionnement du commutateur (16), le dispositif de détermination (20) modifiant la fonction qui détermine l'augmentation de la vitesse souhaitée en fonction de l'actionnement du l'organe de commande d'accélération tel qu'une pédale d'accélérateur,
**caractérisé en ce que**
le dispositif de détermination (20) augmente la vitesse souhaitée avec un taux d'augmentation plus élevé lorsque la pédale d'accélérateur est actionnée en même temps que le commutateur (16).

2. Dispositif d'entrée selon la revendication 1,
**caractérisé par**
un dispositif d'affichage (28) pour l'affichage de la vitesse souhaitée autorisée.

3. Dispositif d'entrée selon l'une des revendications précédentes,
**caractérisé en ce que**
le dispositif de détermination (20) augmente la vitesse souhaitée d'un incrément (D) chaque fois après écoulement d'un intervalle de temps d'augmentation, tant que le commutateur ( 16) est actionné.

4. Dispositif d'entrée selon la revendication 3,
**caractérisé en ce que**
les fonctions qui déterminent l'augmentation de la vitesse souhaitée se différencient par la hauteur de l'incrément (D).

5. Dispositif d'entrée selon la revendication 3 ou 4,
**caractérisé en ce que**
les fonctions qui déterminent l'augmentation de la vitesse souhaitée se différencient par la longueur de l'intervalle de temps d'augmentation.
